# EUROPÄISCHE PATENTSCHRIFT

(11) **EP 3 069 035 B1**
(45) Veröffentlichungstag und Bekanntmachung des Hinweises auf die Patenterteilung: **28.03.2018**
(21) Anmeldenummer: 14798689.7
(22) Anmeldetag: 20.10.2014
(51) Int. Cl.: F16D 13/52, H02K 7/116, F16D 13/70, F16D 13/75

(54) **REIBUNGSKUPPLUNG**
FRICTION CLUTCH
EMBRAYAGE À FRICTION

(30) Priorität: 13.11.2013 DE 102013223044; 28.03.2014 DE 102014205854
(43) Veröffentlichungstag der Anmeldung: 21.09.2016
(73) Patentinhaber: Schaeffler Technologies AG & Co. KG, 91074 Herzogenaurach (DE)
(72) Erfinder: FINKENZELLER, Marc, 77723 Gengenbach (DE); HELMER, Daniel, 77883 Ottenhöfen (DE); CHAMBRION, Martin, F-Geispolsheim Geispolsheim (FR); RUF, Johannes, 77815 Bühl (DE)
(86) Internationale Anmeldenummer: PCT/DE2014/200568
(87) Internationale Veröffentlichungsnummer: WO 2015/070853

(56) Entgegenhaltungen:
- WO-A1-00/17535
- WO-A1-2006/137288
- DE-A1-102012 222 110
- DE-A1-102014 204 001
- US-B1- 6 189 667

## Beschreibung

Die Erfindung betrifft eine Reibungskupplung, insbesondere nasse oder trockene Lamellenkupplung, mit deren Hilfe eine Antriebswelle eines Kraftfahrzeugmotors mit mindestens einer Getriebeeingangswelle eines Kraftfahrzeuggetriebes gekuppelt werden kann, gemäß dem Oberbegriff des Anspruchs 1.

Aus DE 10 2010 048 827 A1 ist eine nasse Lamellenkupplung zum Kuppeln einer Antriebswelle eines Kraftfahrzeugmotors mit einer Getriebeeingangswelle eines Kraftfahrzeuggetriebes bekannt, bei der eine Vorkupplung mit einem Rampenmechanismus vorgesehen ist, um eine erhöhte Anpresskraft im geschlossenen Zustand der Reibungskupplung zu erreichen.

Aus jeder der US 6 189 667 B1 und der WO 00/17535 A1 ist eine Reibungskupplung gemäß dem Oberbegriff des Anspruchs 1 bekannt.

Es besteht ein ständiges Bedürfnis mit geringem konstruktivem Aufwand eine Reibungskupplung sicher schließen zu können.

Es ist die Aufgabe der Erfindung Maßnahmen aufzuzeigen, die ein sicheres Schließen einer Reibungskupplung mit geringem konstruktivem Aufwand ermöglichen.

Die Lösung der Aufgabe erfolgt erfindungsgemäß durch eine Reibungskupplung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Eine Reibungskupplung, insbesondere nasse oder trockene Lamellenkupplung, zum Kuppeln einer Antriebswelle eines Kraftfahrzeugmotors mit mindestens einer Getriebeeingangswelle, ist vorgesehen mit einem mit der Antriebswelle koppelbaren Eingangsteil zum Einleiten eines Drehmoments der Antriebswelle, einem mit der Getriebeeingangswelle koppelbaren Ausgangsteil, insbesondere Ausgangslamellenträger, zum Ausleiten eines Drehmoments, einem relativ zum Eingangsteil und zum Ausgangsteil axial verlagerbaren Anpressteil, insbesondere Eingangslamellenträger, zum reibschlüssigen Verpressen des Ausgangsteils mit dem Eingangsteil und einer als Blattfeder ausgestalteten Rückstellfeder zur Positionierung des Anpressteils relativ zum Eingangsteil in eine definierte Ausgangslage, wobei zumindest ein Teil des von dem Eingangsteil übertragenen Drehmoments über die Rückstellfeder übertragbar ist, wobei die Rückstellfeder zwischen einer Drehmomenteinleitungsstelle und einer Drehmomentausleitungsstelle im Wesentlichen in tangentialer Richtung verläuft und um einen Anstellwinkel zu einer Radialebene der Reibungskupplung schräg verläuft.

Die als Blattfeder ausgestaltete Rückstellfeder wird nicht nur zum Anfahren einer definierten Relativlage des Anpressteils zum Eingangsteil und damit auch zum Ausgangsteil in der Ausgangslage sondern auch zum Übertragen zumindest eines Teils des in die Reibungskupplung eingeleiteten Drehmoments, vorzugsweise des nahezu gesamten in die Reibungskupplung eingeleiteten Drehmoments, verwendet. Da die Rückstellfeder mit dem Eingangsteil und dem relativ zum Ausgangsteil axial verlagerbaren Anpressteil verbunden sein kann, kann sich bei einer Verlagerung des Anpressteils zum Eingangsteil der Anstellwinkel der zumindest einen Teil, insbesondere eines Großteils, des über das Eingangsteil im Zugbetrieb des Kraftfahrzeugmotors eingeleiteten Drehmoments übertragenden Rückstellfeder ändern. Durch den sich vergrößernden oder verkleinernden Anstellwinkel ändern sich in der Art eines schräg betätigten Kniehebels die Kraftverhältnisse an der Rückstellfeder, so dass sich der in Längsrichtung der Rückstellfeder verlaufende Kraftanteil verändert. Entsprechend ändert sich an dem im Zugbetrieb des Kraftfahrzeugmotors in Kraftflussrichtung ausgangsseitigen Ende der Rückstellfeder ("Drehmomentausleitungsstelle") der in axialer Richtung der Reibungskupplung weisende Kraftanteil, so dass sich in Abhängigkeit des Hubwegs des Anpressteils, der mit dem Anstellwinkel der Rückstellfeder korrespondiert, von der Rückstellfeder eine entsprechende sich ändernde Axialkraft aufgeprägt werden kann, die je nach Anwendungsfall mit einer über das Anpressteil eingeleiteten Betätigungskraft zur Anpresskraft addiert oder subtrahiert wird. Dadurch ist es möglich, dass im geschlossenen Zustand der Reibungskupplung über eine durch den Anstellwinkel der Rückstellfeder erreichten Kraftübersetzung eine entsprechend erhöhte an dem Reibbelag wirkende Anpresskraft vorliegt, wodurch ein entsprechend höheres Drehmoment übertragen werden kann. Dieser Effekt der Kraftübersetzung kann sich bei verschlissenen Reibbelägen sogar noch weiter erhöhen. Dadurch kann auch bei hohen Drehmomenten und/oder verschlissenen Reibbelägen ein sicheres Schließen der Reibungskupplung gewährleistet werden. Hierzu kann die sowieso vorgesehene Rückstellfeder genutzt werden, ohne hierzu weitere Kraftübersetzungseinrichtungen, wie beispielsweise Rampensysteme, vorzusehen, so dass ein einfacher konstruktiver Aufbau der Reibungskupplung mit wenigen Bauteilkomponenten erreicht werden kann. Durch die Verwendung der schräg zur Radialebene tangential verlaufenden Rückstellfeder auch zur Drehmomentübertragung zwischen dem Eingangsteil und dem Anpressteil kann durch eine Änderung der Kraftrichtung des über die Rückstellfeder eingeleiteten Drehmoments ein erhöhtes Drehmoment übertragen werden, so dass ein sicheres Schließen einer Reibungskupplung auch bei hohen Drehmomenten mit geringem konstruktivem Aufwand ermöglicht ist.

Je nach konstruktivem Aufbau kann die Rückstellfeder im Zugbetrieb des Kraftfahrzeugmotors auf Druck oder auf Zug belastet werden. Wenn die Rückstellfeder zur Drehmomentübertragung auf Druck belastet wird, kann die als Blattfeder ausgestaltete Rückstellfeder bis zu einer unterhalb einer Knickkraft liegenden und in Längsrichtung der Blattfeder verlaufenden Kraft auf Biegung beansprucht werden. Insbesondere sind mehrere Rückstellfedern vorgesehen, die insbesondere in Umfangsrichtung vorzugsweise auf einem gemeinsamen Nennradius gleichmäßig verteilt sind, so dass sich die an der einzelnen Rückstellfeder angreifenden Kräfte reduzieren können. Die Rückstellfeder verläuft insbesondere im Wesentlichen tangential und kann durch ihren Anstellwinkel relativ zur Radialebene eine axiale Strecke überbrücken. Es ist auch möglich, dass die Rückstellfeder mit einem Anteil in radialer Richtung verläuft, wobei insbesondere der Anteil der Längserstreckung der Rückstellfeder in tangentialer Richtung deutlich größer als in radialer Richtung ist. Die Rückstellfeder weist insbesondere mehrere übereinander angeordnete Federlagen auf, die insbesondere jeweils aus einem Stahlblech hergestellt sind. Mehrere Federlagen können beispielsweise miteinander vernietet sein. Insbesondere ist die Rückstellfeder, beispielsweise durch in den Federlagen eingeprägte Sicken, versteift und entsprechend knickfest ausgestaltet. Die Reibungskupplung ist insbesondere als nasse oder trockene Lamellenkupplung mit mehreren hintereinander vorgesehenen Reibpaarungen zwischen dem Anpressteil und dem Ausgangsteil ausgestaltet. Vorzugsweise kann mit Hilfe eines Kühlmittels, insbesondere Öl, Reibungswärme aus der Reibungskupplung abgeführt werden, so dass die Reibungskupplung insbesondere als nasse Lamellenkupplung ausgestaltet sein kann. Das Eingangsteil und/oder das Ausgangsteil können einen Lamellenträger aufweisen, an dem in axialer Richtung verschiebbare Lamellen geführt sind. Die jeweilige Lamelle kann mit Reibbelägen versehen sein oder als Stahllamelle ausgeführt sein. Die Reibungskupplung kann in der Ausgangslage, wenn über das Betätigungselement keine Betätigungskraft eingeleitet wird, geöffnet ("normally open) oder geschlossen ("normally closed") sein.

Die Reibungskupplung kann insbesondere verwendet werden, um einen Verbrennungsmotor an den Antriebsstrang eines Hybrid-Fahrzeugs anzukuppeln. Bei einer derartigen auch als "E-Clutch" bezeichneten Reibungskupplung kann es sich um eine rotorintegrierte Kupplung handeln, welche den Verbrennungsmotor mit einer elektrischen Maschine sowie dem Antriebsstrang verbindet. Die E-Clutch kann hierbei mit dem Rotor der elektrischen Maschine mitrotieren und/oder den Verbrennungsmotor mit dem Rotor der elektrischen Maschine kuppeln. Zum Starten des Verbrennungsmotors kann die elektrische Maschine eingesetzt werden. Wird bereits elektrisch gefahren, kann die elektrische Maschine zum Zeitpunkt des Motorstarts des Verbrennungsmotors das aktuell bereitgestellte Moment um das Startmoment des Verbrennungsmotors erhöhen, wobei gleichzeitig die E-Clutch geschlossen werden kann. Dadurch kann ein Drehmomentfluss von der elektrischen Maschine zum Verbrennungsmotor erfolgen, um den Verbrennungsmotor zu starten. Hierbei kann insbesondere das übertragbare Moment der E-Clutch sehr genau auf das Startmoment eingestellt werden, damit am Kraftfahrzeug keine unbeabsichtigte Längsbeschleunigung auftritt.

Insbesondere stellt die Rückstellfeder bei der Drehmomentübertragung durch den tangentialen Verlauf der Rückstellfeder eine sich bei einer Erhöhung des Verschleiß von Reibbelägen verändernde Kraftübersetzung in axialer Richtung bereit, wobei die Kraftübersetzung eine Änderung einer sich bei einer Erhöhung des Hubwegs der Anpressteils verändernde Rückstellkraft der Rückstellfeder in axialer Richtung in die Ausgangslage im Wesentlichen ausgleicht. Dadurch ergibt sich zumindest ein Teilbereich zwischen einer der vollständig geöffneten Stellung der Reibungskupplung entsprechenden Relativlage des Anpressteils zum Eingangsteil und einer der bei verschlissenen Reibbelägen vollständig geschlossenen Stellung der Reibungskupplung entsprechenden Relativlage des Anpressteils zum Eingangsteil, in welcher die von dem Anpressteil aufgebrachte Anpresskraft auf das Ausgangsteil im Wesentlichen konstant sein kann. Dies ermöglicht eine im Wesentlichen konstante Betätigungskraft zum Betätigen der Reibungskupplung über die Lebensdauer der Reibungskupplung, was als Komfortgewinn verstanden wird. Insbesondere kann eine Neujustierung der Reibungskupplung nach einem Austausch von Reibbelägen eingespart werden. Durch die Kompensierung der sich erhöhenden Rückstellkraft der Rückstellfeder bei verschlissenen Reibbelägen durch eine sich ändernde Kraftübersetzung der Rückstellfeder kann das von der E-Clutch zu übertragende Drehmoment im Wesentlichen unabhängig vom Verschleiß der Reibbeläge sein, so dass ein sehr komfortables und im Wesentlichen unmerkliches Zuschalten und/oder Abschalten des Verbrennungsmotors an beziehungsweise von dem Antriebsstrang erfolgen kann. Durch die Verwendung der schräg zur Radialebene tangential verlaufenden Rückstellfeder auch zur Drehmomentübertragung kann eine im Verschleiß der Reibbeläge nachlassende Anpresskraft durch eine Änderung der Kraftrichtung des über die Rückstellfeder eingeleiteten Drehmoments zumindest kompensiert werden, so dass ein sicheres Schließen einer Reibungskupplung mit geringem konstruktivem Aufwand ermöglicht ist, wobei insbesondere gleichzeitig ein besonders komfortables Ankuppeln eines Verbrennungsmotors an einen Antriebsstrang eines Hybrid-Kraftfahrzeugs ermöglicht ist.

Vorzugsweise ist eine Erstreckung der Rückstellfeder in Umfangsrichtung und/oder der Anstellwinkel der Rückstellfeder und/oder eine Federsteifigkeit der Rückstellfeder und/oder ein axialer Abstand zwischen der Drehmomenteinleitungsstelle und der Drehmomentausleitungsstelle zum Ausgleichen einer sich erhöhenden Ruckstellkraft der Rückstellfeder bei einem sich erhöhenden Hubweg des Anpressteils relativ zum Eingangsteil gewählt. Durch diese Parameter kann ein geeigneter Verlauf der Kraftübersetzung der Rückstellfeder sowie der Rückstellkraft der Rückstellfeder eingestellt werden.

Besonders bevorzugt ist ein an dem Anpressteil angreifendes Betätigungssystem, insbesondere ein elektrischer, pneumatischer oder hydraulische Ausrücker, zum Verlagern des Anpressteils relativ zum Eingangsteil vorgesehen, wobei zumindest ein Teil der axialen Erstreckung des Betätigungssystems nach radial innen betrachtet von dem Anpressteil überdeckt ist. Das Betätigungssystem kann dadurch zumindest teilweise, vorzugsweise zu einem Großteil radial innerhalb des Anpressteils und/oder des Ausgangsteils in die Reibungskupplung eingesteckt sein. Dadurch kann ein entsprechend geringer Bauraumbedarf erreicht werden. Vorzugsweise ist das Betätigungssystem radial außerhalb zu einer durch das Betätigungssystem hindurch verlaufende Antriebswelle des Kraftfahrzeugmotors angeordnet. Insbesondere kann eine direkte Betätigung der Reibungskupplung, das heißt ohne zwischengeschaltete Übersetzungen durch Rampensysteme oder Hebelelementen, vorgesehen sein, indem das beispielsweise als Ausrücker ausgestaltete Betätigungssystem direkt an dem Anpressteil angreift. Der Ausrücker kann insbesondere einen in einem Zylinder geführten Kolben aufweisen, der in axialer Richtung der Reibungskupplung aus- und eingefahren werden kann.

Insbesondere ist das Betätigungssystem mit einem feststehenden Gehäuseteil, insbesondere zur Befestigung mit dem Kraftfahrzeugmotor, verbunden, wobei das Ausgangsteil und/oder das Anpressteil über ein Lager an dem Gehäuseteil gelagert ist. Das Betätigungssystem ist dadurch nicht mitdrehend sondern feststehend, wodurch eine elektrische Betätigung des Betätigungssystems besonders einfach realisiert werden kann. Gleichzeitig kann das feststehende Gehäuseteil zur lagernden Abstützung des Ausgangsteils und/oder des Anpressteils verwendet werden, wodurch ein Verkippen des Ausgangsteils und/oder des Anpressteils insbesondere unter Fliehkrafteinfluss vermieden werden kann.

Vorzugsweise ist das Eingangsteil über ein insbesondere als Axiallager ausgestaltetes Stützlager an dem Ausgangsteil relativ verdrehbar abgestützt. Die axiale Relativlage des Eingangsteils zu dem Ausgangsteil ist dadurch im Wesentlichen unveränderlich. Insbesondere ist es möglich die auf das Eingangsteil wirkenden Anpresskräfte über das Axiallager an das Ausgangsteil abzutragen, so dass eine Abstützung der Anpresskräfte an der Antriebswelle nicht erforderlich ist. Dadurch können unnötige Biegemomente entlang der radialen Erstreckung des Eingangsteils vermieden werden.

Besonders bevorzugt ist das Eingangsteil als drehfest mit der Antriebswelle verbindbare Scheibe ausgestaltet, wobei das Eingangsteil insbesondere eine Gegenplatte zum Verpressen des Ausgangsteils mit Hilfe des Anpressteils ausbildet. Dadurch können Reibbeläge des Ausgangsteils zwischen dem Anpressteil und dem Eingangsteil reibschlüssig verpresst werden, so dass ein Teil des im Zugbetrieb des Kraftfahrzeugmotors über das Eingansteil eingeleitete Drehmoment direkt von dem Eingangsteil an das Ausgangsteil und ein anderer Teil des Drehmoments indirekt über die Rückstellfeder und das Anpressteil an das Ausgangsteil übertragen werden kann.

Insbesondere weist das Anpressteil ein in axialer Richtung verlaufendes Trägerelement und ein vom Trägerelement nach radial innen abstehendes Krafteinleitungselement zum Einleiten einer Betätigungskraft zum Betätigen der Reibungskupplung auf, wobei die Drehmomentausleitungsstelle der Rückstellfeder mit dem Krafteinleitungselement verbunden ist. Mit dem Trägerelement können insbesondere Lamellen einer Lamellenkupplung drehfest verbunden sein. Vorzugsweise greift ein Betätigungssystem zum Einleiten einer Betätigungskraft in das Anpressteil an einer ersten Axialseite des Krafteinleitungselements an, während die Rückstellfeder an einer von der ersten Axialseite wegweisenden zweiten Axialseite mit der Drehmomentausleitungsstelle drehfest angebunden ist. Die Kraftrichtungen der Betätigungskraft und der von der Rückstellfeder aufgebrachten Rückstellkraft können dadurch auf einem gemeinsamen radialen Abstand zu einer Drehachse der Reibungskupplung angeordnet sein, so dass unnötige Hebelkräfte und Kippmomente vermieden werden können. Ferner kann die Rückstellfeder in einem Radialbereich der Reibungskupplung nahe der Antriebswelle positioniert werden, wo genügend Bauraum freigehalten ist. Der Bauraumbedarf der Reibungskupplung ist dadurch gering gehalten.

Vorzugsweise ist zumindest ein Teil der axialen Erstreckung der Rückstellfeder nach radial innen betrachtet von dem Anpressteil und/oder dem Ausgangsteil überdeckt. Die Rückstellfeder kann dadurch zumindest teilweise, vorzugsweise zu einem Großteil radial innerhalb des Anpressteils und/oder des Ausgangsteils in die Reibungskupplung eingesteckt sein. Dadurch kann ein entsprechend geringer Bauraumbedarf erreicht werden.

Das Ausgangsteil ist als Rotor einer elektrischen Maschine, insbesondere zum rein elektrischen Antrieb eines Kraftfahrzeugs ausgestaltet. Das Ausgangsteil kann an seiner nach radial außen weisenden Mantelfläche ein Rotorelement insbesondere mit Wicklungen und/oder Magneten aufweisen. Dadurch kann die Reibungskupplung gleichzeitig eine elektrische Maschine an das Ausgangsteil anbinden, so dass die Reibungskupplung als E-Clutch sowohl einen als Verbrennungsmotor ausgestalteten Kraftfahrzeugmotor als auch eine elektrische Maschine zum rein elektrischen Antrieb des Kraftfahrzeugs anbinden kann. Die Reibungskupplung eignet sich dadurch insbesondere zum Einsatz in Hybrid-Kraftfahrzeugen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht einer Reibungskupplung und
- Fig. 2:: eine schematische perspektivische Schnittansicht eines teilweise dargestellten Ausführungsbeispiels der Reibungskupplung aus Fig. 1.

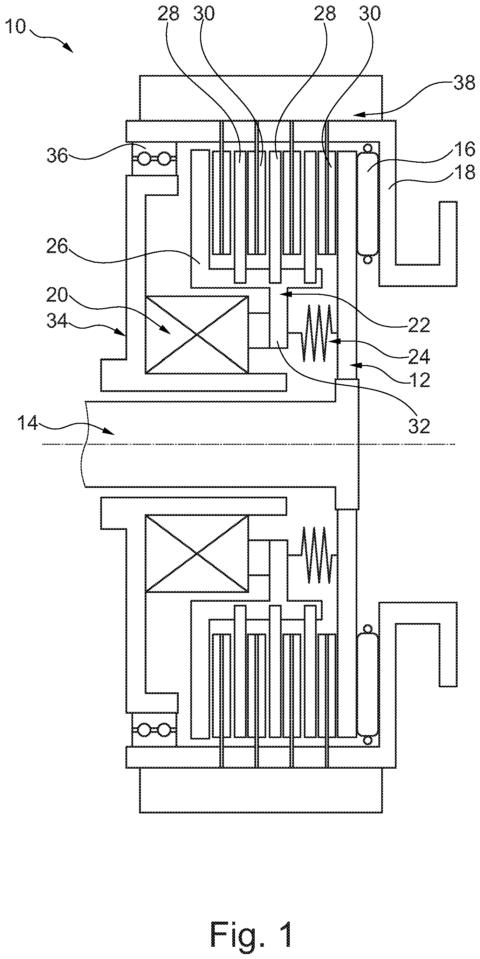

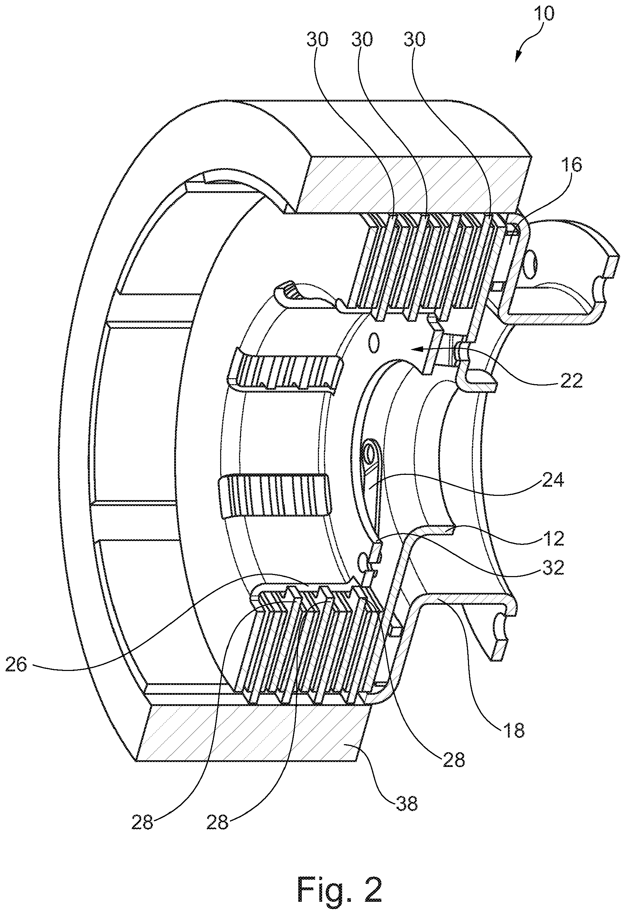

Die in Fig. 1 und Fig. 2 dargestellte Reibungskupplung 10 weist ein scheibenförmiges Eingangsteil 12 auf, das drehfest mit einer Antriebswelle 14 eines als Verbrennungsmotor ausgestalteten Kraftfahrzeugmotors verbunden ist. Das Eingangsteil 14 ist über ein als Axiallager ausgestaltetes Stützlager 16 an einem Ausgangsteil 16 abgestützt. Mit Hilfe eines von einem als elektrischer Ausrücker ausgestalteten Betätigungssystem 20 axial verlagerbaren Anpressteil 22 kann das Eingangsteil 12 mit dem Ausgangsteil 16 reibschlüssig verpresst werden, um im Zugbetrieb des Kraftfahrzeugmotors ein Drehmoment der Antriebswelle 14 an das Ausgangsteil 18 oder zum Start des Kraftfahrzeugmotors ein Drehmoment des Ausgangsteils 18 an die Antriebswelle 14 zu übertragen.

Das Eingangsteil 12 ist über eine als Blattfeder ausgestaltete Rückstellfeder 24 derart verbunden, dass ein signifikanter Anteil des zu übertragenen Drehmoments über die Rückstellfeder 24 zwischen dem Eingangsteil 12 und dem Anpressteil 22 ausgetauscht werden kann. Dadurch kann der Drehmomentfluss nicht nur über das Eingangsteil 12 und das Ausgangsteil 18 direkt sondern zusätzlich auch indirekt über das Anpressteil 22 erfolgen. Im dargestellten Ausführungsbeispiel weist das Anpressteil 22 ein Trägerelement 26 auf, mit dem drehfest Stahllamellen 28 verbunden sind. Die Stahllamellen 28 sind in axialer Richtung alternierend zu Reibbeläge aufweisenden Reiblamellen 30 angeordnet, die drehfest mit dem Ausgangsteil 18 verbunden sind. Dadurch können das Anpressteil 22 und das Ausgangsteil 18 in der Art einer Lamellenkupplung zusammenwirken. Von dem Trägerelement 26 steht nach radial innen ein Krafteinleitungselement 32 ab, an dem an der einen Axialseite das Betätigungssystem 20 und an der anderen Axialseite die mindestens eine Rückstellfeder 24 angreifen.

Das Betätigungssystem 20 ist mit einem feststehenden Gehäuseteil 34 befestigt. Im dargestellten Ausführungsbeispiel ist gleichzeitig das Ausgangsteil 18 über ein Lager 36 an dem Gehäuseteil 34 gelagert und abgestützt. Das Ausgangsteil 18 weist zusätzlich ein nach radial außen weisendes Rotorelement 38 auf, so dass das Ausgangsteil 18 gleichzeitig den Rotor einer elektrischen Maschine zum rein elektrischen Antrieb des Kraftfahrzeugs ausbilden kann. Die Reibungskupplung 10 kann dadurch als sogenannte "E-Clutch" sowohl den als Verbrennungsmotor ausgestalteten Kraftfahrzeugmotor als auch die elektrische Maschine an einen Antriebsstrang des Kraftfahrzeugs anbinden. Die Reibungskupplung 10 kann, insbesondere über einer weitere zwischengeschaltete Kupplung, mit mindestens einer Getriebeeingangswelle eines Kraftfahrzeuggetriebes gekoppelt werden.

### Bezugszeichenliste

- 10: Reibungskupplung
- 12: Eingangsteil
- 14: Antriebswelle
- 16: Stützlager
- 18: Ausgangsteil
- 20: Betätigungssystem
- 22: Anpressteil
- 24: Rückstellfeder
- 26: Trägerelement
- 28: Stahllamelle
- 30: Reiblamelle
- 32: Krafteinleitungselement
- 34: Gehäuseteil
- 36: Lager
- 38: Rotorelement

## Patentansprüche

1. Reibungskupplung zum Kuppeln einer Antriebswelle (14) eines Kraftfahrzeugmotors mit mindestens einer Getriebeeingangswelle, mit
einem mit der Antriebswelle (14) koppelbaren Eingangsteil (12) zum Einleiten eines Drehmoments der Antriebswelle (14),
einem mit der Getriebeeingangswelle koppelbaren Ausgangsteil (18) zum Ausleiten eines Drehmoments,
einem relativ zum Eingangsteil (12) und zum Ausgangsteil (18) axial verlagerbaren Anpressteil (22) zum reibschlüssigen Verpressen des Ausgangsteils (18) mit dem Eingangsteil (12) und
einer als Blattfeder ausgestalteten Rückstellfeder (24) zur Positionierung des Anpressteils (22) relativ zum Eingangsteil (12) in eine definierte Ausgangslage, wobei
zumindest ein Teil des von dem Eingangsteil (12) übertragenen Drehmoments über die Rückstellfeder (24) übertragbar ist, und
die Rückstellfeder (24) zwischen einer Drehmomenteinleitungsstelle und einer Drehmomentausleitungsstelle im Wesentlichen in tangentialer Richtung verläuft und um einen Anstellwinkel zu einer Radialebene der Reibungskupplung (10) schräg verläuft,
**dadurch gekennzeichnet, dass**
ein an dem Anpressteil (22) angreifendes Betätigungssystem (20) zum Verlagern des Anpressteils (22) relativ zum Eingangsteil (12) vorgesehen ist, und
zumindest ein Teil der axialen Erstreckung des Betätigungssystems (20) nach radial innen betrachtet von dem Anpressteil (22) überdeckt ist.

2. Reibungskupplung nach Anspruch 1, **dadurch gekennzeichnet, dass**
die Rückstellfeder (24) bei der Drehmomentübertragung durch den tangentialen Verlauf der Rückstellfeder (24) eine sich bei einer Erhöhung des Verschleiß von Reibbelägen verändernde Kraftübersetzung in axialer Richtung bereitstellt, und
die Kraftübersetzung eine Änderung einer sich bei einer Erhöhung des Hubwegs der Anpressteils (22) verändernde Rückstellkraft der Rückstellfeder (24) in axialer Richtung in die Ausgangslage im Wesentlichen ausgleicht oder überkompensiert.

3. Reibungskupplung nach Anspruch 1 oder 2, **dadurch gekennzeichnet, dass** eine Erstreckung der Rückstellfeder (24) in Umfangsrichtung und/oder der Anstellwinkel der Rückstellfeder (24) und/oder eine Federsteifigkeit der Rückstellfeder (24) und/oder ein axialer Abstand zwischen der Drehmomenteinleitungsstelle und der Drehmomentausleitungsstelle zum Ausgleichen einer sich erhöhenden Ruckstellkraft der Rückstellfeder (24) bei einem sich erhöhenden Hubweg des Anpressteils (22) relativ zum Eingangsteil (12) gewählt ist.

4. Reibungskupplung nach einem der Ansprüche 1 bis 3, **dadurch gekennzeichnet, dass**
das Betätigungssystem (20) mit einem feststehenden Gehäuseteil (34) verbunden ist, und
das Ausgangsteil (18) und/oder das Anpressteil (22) über ein Lager (36) an dem Gehäuseteil (34) gelagert ist.

5. Reibungskupplung nach einem der Ansprüche 1 bis 4, **dadurch gekennzeichnet, dass** das Eingangsteil (12) über ein Stützlager (16) an dem Ausgangsteil (18) relativ verdrehbar abgestützt ist.

6. Reibungskupplung nach einem der Ansprüche 1 bis 5, **dadurch gekennzeichnet, dass**
das Eingangsteil (12) als drehfest mit der Antriebswelle (14) verbindbare Scheibe ausgestaltet ist, und
das Eingangsteil (12) eine Gegenplatte zum Verpressen des Ausgangsteils (18) mit Hilfe des Anpressteils (22) ausbildet.

7. Reibungskupplung nach einem der Ansprüche 1 bis 6, **dadurch gekennzeichnet, dass**
das Anpressteil (22) ein in axialer Richtung verlaufendes Trägerelement (26) und ein vom Trägerelement (26) nach radial innen abstehendes Krafteinleitungselement (32) zum Einleiten einer Betätigungskraft zum Betätigen der Reibungskupplung (10) aufweist, und
die Drehmomentausleitungsstelle der Rückstellfeder (24) mit dem Krafteinleitungselement (32) verbunden ist.

8. Reibungskupplung nach einem der Ansprüche 1 bis 7, **dadurch gekennzeichnet, dass** zumindest ein Teil der axialen Erstreckung der Rückstellfeder (24) nach radial innen betrachtet von dem Anpressteil (22) und/oder dem Ausgangsteil (18) überdeckt ist.

9. Reibungskupplung nach einem der Ansprüche 1 bis 8, **dadurch gekennzeichnet, dass** das Ausgangsteil (18) als Rotor einer elektrischen Maschine ausgestaltet ist.

## Claims

1. Friction clutch for coupling a drive shaft (14) of
a motor vehicle engine to at least one transmission input shaft, having
an input part (12) which can be coupled to the drive shaft (14) in order to introduce a torque of the drive shaft (14),
an output part (18) which can be coupled to the transmission input shaft in order to output a torque,
a pressing part (22) which can be moved axially relative to the input part (12) and to the output part (18) in order to press the output part (18) to the input part (12) in a frictionally locking manner, and
a restoring spring (24) which is configured as a leaf spring in order to position the pressing part (22) into a defined starting position relative to the input part (12),
it being possible for at least part of the torque which is transmitted from the input part (12) to be transmitted via the restoring spring (24), and
the restoring spring (24) running substantially in a tangential direction between a torque introduction point and a torque output point and running obliquely by an angle of attack with respect to a radial plane of the friction clutch (10),
**characterized in that**
an actuating system (20) which acts on the pressing part (22) is provided in order to move the pressing part (22) relative to the input part (12), and
at least part of the axial extent of the actuating system (20) is covered by the pressing part (22) as viewed radially to the inside.

2. Friction clutch according to Claim 1,
**characterized in that**, during the transmission of torque, the restoring spring (24) provides a transmission of force in the axial direction which changes in the case of an increase of the wear of friction linings as a result of the tangential course of the restoring spring (24), and the transmission of force substantially compensates for or overcompensates for a change of a restoring force of the restoring spring (24) in the axial direction into the starting position, which restoring force changes in the case of an increase of the stroke travel of the pressing part (22).

3. Friction clutch according to Claim 1 or 2,
**characterized in that** an extent of the restoring spring (24) in the circumferential direction and/or the angle of attack of the restoring spring (24) and/or a spring stiffness of the restoring spring (24) and/or an axial spacing between the torque introduction point and the torque output point are/is selected for compensating for an increasing restoring force of the restoring spring (24) in the case of an increasing stroke travel of the pressing part (22) relative to the input part (12).

4. Friction clutch according to one of Claims 1 to 3,
**characterized in that** the actuating system (20) is connected to a stationary housing part (34), and the output part (18) and/or the pressing part (22) are/is mounted on the housing part (34) via a bearing (36).

5. Friction clutch according to one of Claims 1 to 4,
**characterized in that** the input part (12) is supported on the output part (18) via a supporting bearing (16) such that it can be rotated relatively.

6. Friction clutch according to one of Claims 1 to 5,
**characterized in that** the input part (12) is configured as a disc which can be connected fixedly to the drive shaft (14) so as to rotate with it, and the input part (12) configures a counterplate for pressing the output part (18) with the aid of the pressing part (22).

7. Friction clutch according to one of Claims 1 to 6,
**characterized in that** the pressing part (22) has a carrier element (26) which runs in the axial direction and a force introduction element (32) which projects radially to the inside from the carrier element (26) for introducing an actuating force for actuating the friction clutch (10), and the torque output point of the restoring spring (24) is connected to the force introduction element (32).

8. Friction clutch according to one of Claims 1 to 7,
**characterized in that** at least part of the axial extent of the restoring spring (24) is covered by the pressing part (22) and/or the output part (18) as viewed radially to the inside.

9. Friction clutch according to one of Claims 1 to 8,
**characterized in that** the output part (18) is configured as a rotor of an electric machine.

## Revendications

1. Embrayage à friction destiné à raccorder un arbre d'entraînement (14) du moteur d'un véhicule automobile à au moins un arbre d'entrée de transmission et présentant
une partie d'entrée (12) apte à être accouplée à l'arbre d'entraînement (14) pour recevoir un couple de rotation de l'arbre d'entraînement (14),
une partie de sortie (18) apte à être accouplée à l'arbre d'entrée de transmission pour appliquer un couple de rotation,
une partie de poussée (22) apte à être déplacée axialement par rapport à la partie d'entrée (12) et à la partie de sortie (18), pour repousser en correspondance de frottement la partie de sortie (18) contre la partie d'entrée (12),
un ressort de rappel (24) configuré comme ressort à lame et destiné à positionner la partie de poussée (22) par rapport à la partie d'entrée (12) dans une position initiale définie,
au moins une partie du couple de rotation transmis par la partie d'entrée (12) pouvant être transmise par l'intermédiaire du ressort de rappel (24) et
le ressort de rappel (24) s'étendant essentiellement dans la direction tangentielle entre un emplacement d'entrée d'un couple de rotation et un emplacement de sortie d'un couple de rotation et s'étend obliquement par rapport au plan radial de l'embrayage à friction (10) à un angle de placement, **caractérisé en ce que**
un système d'actionnement (20) qui engage la partie de poussée (22) est prévu pour déplacer la partie de poussée (22) par rapport à la partie d'entrée (12) et
au moins une partie de l'extension axiale du système d'actionnement (20) est recouverte radialement vers l'intérieur par la partie de poussée (22).

2. Embrayage à friction selon la revendication 1, **caractérisé en ce que** du fait de l'extension tangentielle du ressort de rappel (24), lors de la transmission d'un couple de rotation, le ressort de rappel (24) transmet dans la direction axiale une force qui va lorsque l'usure des garnitures de frottement augmente et **en ce que** la transmission de force compense essentiellement ou sur-compense dans la position initiale la modification de la force de rappel du ressort de rappel (24) dans la direction axiale qui varie lorsque la course de la partie de poussée (22) augmente.

3. Embrayage à friction selon les revendications 1 ou 2, **caractérisé en ce que** l'extension du ressort de rappel (24) dans la direction périphérique,
l'angle de pose du ressort de rappel (24), la rigidité du ressort de rappel (24) et/ou la distance axiale entre l'emplacement d'entrée du couple de rotation et l'emplacement de sortie du couple de rotation est sélectionné de manière à compenser l'augmentation de la force de rappel du ressort de rappel (24) lorsque la course de la partie de poussée (22) par rapport à la partie d'entrée (12) augmente.

4. Embrayage à friction selon l'une des revendications 1 à 3, **caractérisé en ce que** le système d'actionnement (20) est relié à une partie fixe (34) du boîtier et **en ce que** la partie de sortie (18) et/ou la partie de poussée (22) sont montées sur la partie fixe (34) du boîtier par l'intermédiaire d'un palier (36).

5. Embrayage à friction selon l'une des revendications 1 à 4, **caractérisé en ce que** la partie d'entrée (12) s'appuie sur la partie de sortie (18) en pouvant tourner par l'intermédiaire d'un palier de soutien (16).

6. Embrayage à friction selon l'une des revendications 1 à 5, **caractérisé en ce que** la partie d'entrée (12) est configurée comme disque pouvant être relié à rotation solidaire à l'arbre d'entraînement (14) et **en ce que** la partie d'entrée (12) forme une contre-plaque permettant de repousser la partie de sortie (18) à l'aide de la partie de poussée (22).

7. Embrayage à friction selon l'une des revendications 1 à 6, **caractérisé en ce que** la partie de poussée (22) présente un élément de support (26) s'étendant dans la direction axiale et un élément (32) d'application de force débordant radialement vers l'intérieur de l'élément de support (26), pour appliquer une force d'actionnement qui actionne l'embrayage à friction (10) et **en ce que** l'emplacement de sortie de couple de rotation du ressort de rappel (24) est relié à l'élément (32) d'application de force.

8. Embrayage à friction selon l'une des revendications 1 à 7, **caractérisé en ce qu'**au moins une partie de l'extension axiale du ressort de rappel (24) est recouverte radialement vers l'intérieur par la partie de poussée (22) et/ou la partie de sortie (18).

9. Embrayage à friction selon l'une des revendications 1 à 8, **caractérisé en ce que** la partie de sortie (18) est configurée comme rotor d'une machine électrique.
